# DEMANDE DE BREVET EUROPEEN

(11) **EP 2 743 600 A1**
(43) Date de publication de la demande: **18.06.2014**
(21) Numéro de dépôt: 13197551.8
(22) Date de dépôt: 16.12.2013
(51) Int. Cl.: F24H 3/02, F24H 3/12, F24H 9/20, F24D 19/00, F24D 19/10, F24F 1/00, G05D 23/19, F24D 13/04

(54) **Appareil de chauffage comprenant un bloc ventilo-convecteur et un dispositif de chauffage électrique, et procédé correspondant**

(30) Priorité: 17.12.2012 FR 1262120
(71) Demandeur: Atlantic Industrie, 85000 La Roche sur Yon (FR)
(72) Inventeur: Gatel, Guillaume, 35770 Vern sur Seiche (FR); Lefebvre, Sylvain, 86100 Châtellerault (FR)
(74) Mandataire: Dutreix, Hugues Ours

(57) **Abrégé**

L'invention concerne un appareil de chauffage qui inclut un bloc ventiloconvecteur comprenant un circuit de circulation de fluide et un ventilateur (21), et un dispositif (3) de chauffage électrique. Ledit appareil comprend des moyens de détermination (4) d'une température (Tamb), appelée température ambiante, des moyens de définition d'une température de consigne (Tc), et, des moyens de détermination (5), compte tenu de la température de consigne et de la température ambiante déterminée, de la puissance (P1) de chauffage globale à fournir par l'appareil pour atteindre la température de consigne. Ledit appareil comprend aussi des moyens de répartition (6) de commande de puissance configurés pour répartir entre le bloc ventilo-convecteur et le dispositif de chauffage électrique ladite puissance (P1) de chauffage globale à fournir.

## Description

La présente invention concerne de manière générale les appareils de chauffage.

On connaît de l'état de la technique des appareils de chauffages comprenant un bloc ventilo-convecteur. Le bloc ventilo-convecteur comprend un ventilateur et un circuit de circulation de fluide formant circuit échangeur de chaleur entre ledit fluide et l'air brassé par le ventilateur. On constate cependant qu'avec un tel appareil connu de l'état de la technique, la pièce dans laquelle se trouve l'utilisateur de l'appareil est soumise à un gradient de température important, ce qui génère chez l'utilisateur une sensation d'inconfort.

On connait du document US6149066, une installation de chauffage qui comprend un échangeur de chaleur permettant de chauffer de l'air dont la circulation est forcée à travers un conduit par un ventilateur. Le conduit d'air loge aussi un module de chauffage incluant une résistance électrique variable.

Pour modifier la température de l'air, le document US6149066 prévoit uniquement de jouer sur la valeur de la résistance variable du module de chauffage de l'installation.

Avec la solution du document US6149066, la simple modification de la valeur de la résistance variable du module de chauffage n'est pas adaptée pour offrir un pilotage souple en vue de répondre aux besoins de confort du client rapidement et tout en optimisant la consommation d'énergie de l'appareil.

La présente invention a pour but de résoudre tout ou parties des problèmes évoqués ci-dessus.

En particulier, l'invention a pour but de proposer un nouvel appareil de chauffage permettant d'obtenir une sensation de confort, encore appelée sensation de chaleur douce, tout en réduisant la consommation énergétique de l'appareil, et tout en permettant d'atteindre rapidement la température de consigne souhaitée.

A cet effet, l'invention a pour objet un appareil de chauffage comportant un dispositif de chauffage, appelé bloc ventilo-convecteur, qui comprend un ventilateur et un circuit de circulation de fluide,
caractérisé en ce que ledit appareil comporte en outre:
- un dispositif de chauffage électrique,
- des moyens de détermination d'une température, appelée température ambiante,
- des moyens de définition d'une température de consigne, et,
- des moyens de détermination, compte tenu de la température de consigne et de la température ambiante déterminée, de la puissance de chauffage globale à fournir par l'appareil pour atteindre la température de consigne,
et en ce que ledit appareil comprend des moyens de répartition de commande de puissance configurés pour répartir entre le bloc ventilo-convecteur et le dispositif de chauffage électrique ladite puissance de chauffage globale à fournir.

L'appareil selon l'invention permet ainsi de répartir au mieux la puissance de chauffage à fournir entre le bloc ventilo-convecteur et le dispositif de chauffage électrique, qui peut fournir rapidement une puissance de chauffage donnée par rapport au bloc ventilo-convecteur, ce qui permet de répondre au besoin de confort du client tout en optimisant la consommation d'énergie de l'appareil.

La présence du ventilateur permet de répartir dans la pièce la chaleur fournie par le circuit de circulation de fluide pour atteindre rapidement la température de consigne souhaitée avec une consommation d'énergie optimisée, et le dispositif de chauffage électrique supplémentaire permet non seulement de compléter la puissance de chauffage fournie par le bloc ventilo-convecteur mais également, par rayonnement, de conserver pour l'utilisateur une sensation de chaleur pour compenser l'effet du mouvement de convection d'air que peut ressentir l'utilisateur du fait du fonctionnement du ventilateur.

L'utilisation d'un chauffage d'appoint formé par le dispositif de chauffage électrique permet de délocaliser un besoin d'appoint de puissance sur l'appareil sollicité plutôt que sur un générateur de chaleur central, comme cela peut être le cas avec une pompe à chaleur munie d'une résistance d'appoint, lorsqu'un tel générateur de chaleur central alimente en fluide les circuits échangeurs d'une pluralité d'appareils de chauffage. Ainsi, l'intégration du dispositif électrique de chauffage dans l'appareil permet de localiser l'appoint de puissance là où l'appoint de puissance est demandé.

En particulier, le bloc ventilo-convecteur permet généralement de fournir 80% des besoins de l'utilisateur avec une inertie qui réduit les dépenses énergétiques et les 20% de besoin restant peuvent être obtenus rapidement grâce à l'appoint fourni par le dispositif de chauffage électrique considéré comme un dispositif à action instantanée par comparaison à l'inertie thermique du bloc ventilo-convecteur. Une telle répartition de la puissance de chauffage permet d'obtenir une sensation de chaleur douce tout en réduisant la consommation énergétique et tout en atteignant rapidement la température de consigne souhaitée.

En outre dans certains cas où l'on ne peut plus prélever de chaleur au niveau du circuit échangeur du bloc ventilo-convecteur, par exemple du fait de l'utilisation du générateur pour le chauffage d'eau chaude sanitaire, ou du fait d'une limitation de la température du fluide fournie par le générateur de chauffage, l'utilisation du dispositif de chauffage électrique instantané permet l'apport de tout ou partie de la puissance de chauffage souhaitée et ainsi de diminuer la sensation d'inconfort pour l'utilisateur.

Avantageusement, ledit dispositif de chauffage électrique est positionné du côté de la façade de l'appareil tourné vers l'extérieur de l'appareil pour rayonner vers l'usager et son environnement.

Selon une caractéristique avantageuse de l'invention, lesdits moyens de répartition de commande de puissance comprennent, d'une part, des moyens de détermination d'une première valeur de puissance de chauffage à fournir par le bloc ventilo-convecteur et d'une deuxième valeur de puissance de chauffage à fournir par le dispositif de chauffage électrique pour atteindre ladite puissance de chauffage globale,
et, d'autre part, des moyens de commande de la vitesse de rotation du ventilateur du bloc ventilo-convecteur pour fournir ladite première valeur de puissance de chauffage, et des moyens de commande de l'alimentation électrique du dispositif de chauffage électrique pour fournir ladite deuxième valeur de puissance de chauffage.

Il est ainsi possible de répartir la puissance de chauffage global à fournir à la fois sur le dispositif de chauffage électrique et également sur le bloc ventilo-convecteur en commandant la vitesse de rotation du ventilateur dudit bloc ventilo-convecteur pour fournir la valeur de puissance de chauffage correspondante souhaitée qui, combinée à la puissance de chauffage fournie par le bloc ventilo-convecteur, va permettre d'obtenir la puissance globale souhaitée et donc la température souhaitée.

A l'inverse, l'installation selon le document US 6149066 ne permet pas de régler la vitesse de rotation du ventilateur. L'installation selon le document US 6149066 doit donc se contenter de modifier la puissance fournie par le module de chauffage via sa résistance électrique variable, ce qui limite les capacités de réglage de la puissance de chauffage et ne permet pas, contrairement à l'invention, de sélectionner la meilleure répartition de puissance entre, d'une part, l'ensemble formé du ventilateur et du circuit de fluide et, d'autre part, le dispositif de chauffage électrique, suivant que l'on souhaite atteindre rapidement la température de consigne et/ou réduire les nuisances sonores de l'appareil.

Selon une caractéristique avantageuse de l'invention, ledit appareil comprend des moyens de détermination de la température de fluide dudit circuit de circulation de fluide.

Préférentiellement, l'appareil comprend des moyens de détermination de la puissance de chauffage maximale, et éventuellement de la puissance de chauffage minimale, disponible(s) du bloc ventilo-convecteur à partir de la température de fluide déterminée dudit circuit de circulation de fluide et à partir de la vitesse maximale, et éventuellement de la vitesse minimale, de rotation du ventilateur,
et en ce que lesdits moyens de répartition de commande de puissance sont configurés pour répartir la puissance de chauffage globale à fournir entre le bloc ventilo-convecteur et le dispositif de chauffage électrique en fonction de la puissance maximale, et éventuellement de la puissance minimale, de chauffage disponible(s) du bloc ventilo-convecteur.

La prise en compte de la température du fluide du circuit échangeur et de la vitesse de rotation maximale du ventilateur permet de déterminer la puissance disponible au niveau du bloc ventilo-convecteur.

Préférentiellement, pour fournir ladite première valeur de puissance de chauffage, les moyens de commande de la vitesse de rotation du ventilateur commandent ladite vitesse de rotation en fonction de la température de fluide du circuit de circulation de fluide.

Selon une caractéristique avantageuse de l'invention, lesdits moyens de détermination de température ambiante comprennent une sonde de température permettant de mesurer une valeur de température à proximité dudit appareil de chauffage,
et lesdits moyens de détermination de température ambiante sont configurés pour déterminer ladite valeur de température ambiante à partir de la valeur de température mesurée par ladite sonde de température de proximité et, éventuellement, à partir de la valeur de température de fluide du circuit de circulation de fluide et/ou d'une grandeur représentative de la puissance de chauffage, de préférence la valeur du taux de marche, fournie par le dispositif de chauffage électrique.

De préférence, ledit appareil comprend des moyens de détection d'un paramètre extérieur à l'appareil, tel que la présence ou non d'un utilisateur et/ou l'ouverture d'une porte ou d'une fenêtre,
et ledit appareil comprend des moyens de modification de la température de consigne en fonction dudit paramètre extérieur.

Selon une caractéristique avantageuse de l'invention, l'appareil comprend des moyens de pilotage configurés pour comparer, d'une part, la valeur de la température de fluide du circuit de circulation de fluide du bloc ventilo-convecteur avec au moins une valeur seuil de température et, d'autre part, la valeur de la température ambiante avec ladite valeur de la température de fluide et pour, en fonction du résultat de ces comparaisons, faire fonctionner l'appareil selon un mode, dit mode de défaut, pour lequel la vitesse de rotation du ventilateur est nulle.

L'invention concerne également une installation de chauffage comprenant un générateur de chauffage central et un appareil de chauffage, caractérisé en ce que ledit appareil est tel que décrit ci-dessus, ledit circuit de circulation de fluide de l'appareil étant alimenté en fluide par ledit générateur de chauffage central.

L'invention concerne également un procédé de chauffage à l'aide d'un appareil de chauffage tel que décrit ci-dessus, ledit procédé comprenant les étapes de :
- définition d'une température de consigne,
- détermination d'une température, appelée température ambiante,
- détermination, compte tenu de la température de consigne et de la température ambiante déterminée, de la puissance de chauffage globale à fournir par l'appareil pour atteindre la température de consigne,
- répartition de ladite puissance de chauffage globale à fournir entre le dispositif de chauffage à inertie et le dispositif de chauffage électrique.

L'invention sera bien comprise à la lecture de la description suivante d'exemples de réalisation, en référence aux dessins annexés dans lesquels :

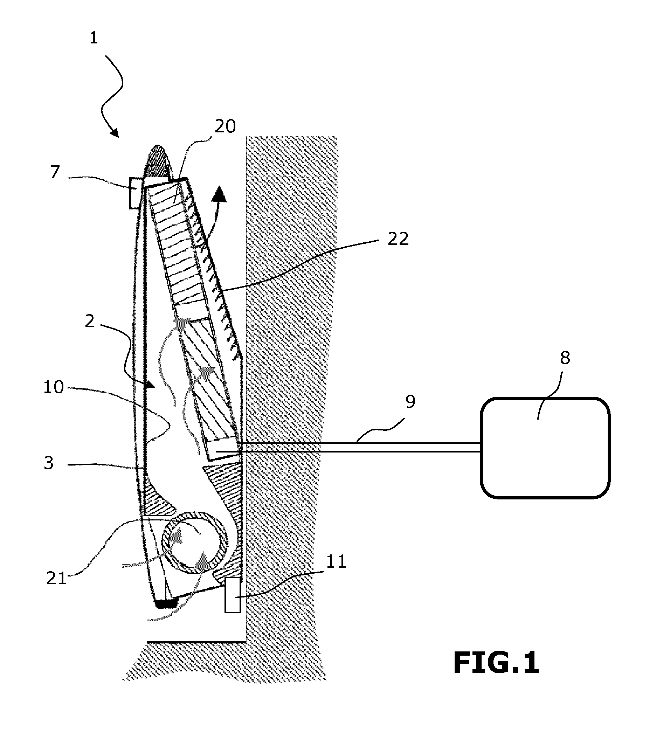

- la figure 1 est une vue schématique d'un appareil de chauffage selon un mode de réalisation de l'invention, à l'état raccordé du circuit échangeur du bloc ventilo-convecteur à un générateur thermique ou frigorifique;
- la figure 2 est un schéma de blocs fonctionnels de l'appareil selon un mode de réalisation de l'appareil, par exemple conforme à celui de la figure 1 ;
- la figure 3 est un schéma de procédé de régulation de chauffage pour un mode de réalisation de l'appareil, par exemple conforme à celui des figures 1 ou 2 ;
- la figure 4 est un graphique illustrant la répartition de puissance à fournir sur le bloc ventilo-convecteur et sur le dispositif de chauffage électrique selon un mode de réalisation de l'appareil de chauffage, par exemple conforme à celui des figures 1 à 3, en fonction de la puissance demandée, ladite répartition correspondant à un premier scénario de répartition, appelé scénario en confort ;
- la figure 5 est un graphique illustrant la répartition de puissance à fournir sur le bloc ventilo-convecteur et sur le dispositif de chauffage électrique selon un mode de réalisation de l'appareil de chauffage, par exemple conforme à celui des figures 1 à 3, en fonction de la puissance demandée, ladite répartition correspondant à un deuxième scénario de répartition, appelé scénario en confort plus ;
- la figure 6 est un graphique illustrant la correction de la température de consigne d'un mode de réalisation de l'appareil de chauffage, par exemple celui d'une des figures 1 à 5, en fonction d'une détection ou non de présence.

En référence aux figures et comme rappelé ci-dessus, l'invention concerne un appareil 1 de chauffage comportant un bloc 2 ventilo-convecteur qui comprend un ventilateur 21 et un circuit 20 de circulation de fluide formant circuit échangeur de chaleur. Ledit circuit échangeur de chaleur est alimentable en fluide par un générateur 8 de chauffage central, tel qu'une pompe à chaleur ou une chaudière. Ledit fluide est par exemple de l'eau.

En particulier, dans l'exemple illustré aux figures, ledit circuit 20 échangeur de chaleur du bloc 2 ventilo-convecteur est raccordé par un circuit d'alimentation 9 au générateur 8 de chauffage. Le générateur 8 permet d'alimenter en fluide le circuit 20 échangeur à une température donnée.

Ledit circuit 20 échangeur est par exemple formé d'un bloc de tubes, de préférence en cuivre, munis d'ailettes par exemple en aluminium.

Lorsque le générateur 8 de chauffage fait également générateur de froid, comme dans le cas d'une pompe à chaleur, ledit appareil peut être considéré comme un radiateur réversible. En effet, le fluide qui traverse le circuit 20 d'échange peut être refroidi par ledit générateur, ce qui permet d'abaisser la température ambiante autour de l'appareil.

Ledit bloc 2 ventilo-convecteur comprend aussi un ventilateur 21 qui permet d'activer ou non un mouvement de convection forcée de l'air autour dudit échangeur pour augmenter ou non les échanges thermiques entre le fluide qui traverse ledit circuit échangeur dudit appareil 1 et l'air ambiant présent autour dudit appareil 1. Le ventilateur 21 est dirigé vers ledit circuit 20 échangeur pour diffuser par convection la chaleur dégagée par ledit circuit 20 échangeur.

Avantageusement, ledit appareil comprend une grille 22 de sortie d'air sur le dessus de l'appareil, en particulier au dessus de l'échangeur 20.

Ledit appareil comprend aussi un dispositif 3 de chauffage électrique, appelé dispositif de chauffage instantané. Ledit dispositif de chauffage électrique est dit instantané par comparaison au temps de montée en température du circuit échangeur du bloc ventilo-convecteur.

Ledit dispositif 3 de chauffage électrique instantané est un dispositif de chauffage distinct du bloc ventilo-convecteur.

L'appareil comprend une unité électronique et informatique de traitement et de calcul. Ladite unité peut être réalisée sous la forme d'une carte électronique munie d'un microcontrôleur ou d'un microprocesseur associé à une mémoire. Ainsi, lorsque dans la suite de la description, il est précisé que des moyens donnés sont configurés pour réaliser une opération donnée, cela signifie que l'unité électronique et informatique comprend des instructions informatiques permettant de réaliser ladite opération.

Ladite unité comprend des moyens de commande de la puissance de chauffage du bloc 2 ventilo-convecteur par commande de la vitesse de rotation V21 du ventilateur 21, et des moyens de commande de la puissance de chauffage dudit dispositif 3 de chauffage électrique par commande de l'alimentation électrique dudit dispositif de chauffage électrique.

Ledit dispositif 3 de chauffage électrique instantané est fixé à la façade 10 de l'appareil de manière à chauffer l'air présent du côté de la façade de l'appareil, c'est-à-dire du côté opposé à la face de l'appareil destinée à être appliquée contre un support. Ledit dispositif de chauffage instantané comprend de préférence un film résistif appliqué sur la façade de l'appareil, de préférence du côté extérieur de l'appareil.

Le positionnement en façade du dispositif de chauffage électrique instantané permet de transmettre à la pièce de la chaleur par rayonnement et ainsi de diminuer la sensation d'inconfort que peut générer l'air déplacé par le ventilateur. Le dispositif de chauffage électrique instantané en façade permet donc d'apporter plus de confort thermique.

Le bloc ventilo-convecteur permet de fournir une puissance de chauffage de 700 à 800 watts. Le dispositif de chauffage électrique instantané permet de fournir une puissance de chauffage de 200 à 300 watts, mais plus rapidement que le bloc ventilo-convecteur.

Ladite unité de traitement et de calcul comprend aussi des moyens de détermination 4 d'une température Tamb, appelée température ambiante. La température ambiante correspond à la température moyenne dans la pièce où se situe l'appareil 1. Ladite unité de traitement et de calcul comprend aussi des moyens de définition d'une température de consigne Tc.

Lesdits moyens de définition de température de consigne Tc peuvent être réalisés sous forme d'une interface homme-machine permettant de renseigner la température de consigne Tc. En variante, on peut prévoir que la température de consigne Tc est déterminée automatiquement par lecture de table(s) ou d'abaque(s). La définition d'une température de consigne peut être réalisée en fonction du temps, c'est-à-dire avec un profil de température fonction du temps.

L'unité de traitement et de calcul comprend aussi des moyens de détermination 5, compte tenu de la température de consigne Tc et de la température ambiante Tamb déterminée, de la puissance P1 de chauffage globale à fournir par l'appareil 1 pour atteindre la température de consigne Tc. Les moyens de détermination 5 de la puissance globale P1 à fournir peuvent être réalisés sous la forme d'un bloc proportionnel-intégrateur.

Ladite unité de traitement et de calcul comprend aussi des moyens de répartition 6 de commande de puissance configurés pour répartir entre le bloc 2 ventilo-convecteur et le dispositif 3 de chauffage électrique, ladite puissance P1 de chauffage globale à fournir. Autrement dit, ladite puissance de chauffage supplémentaire à fournir est répartie entre le bloc-ventilateur 2 et le dispositif de chauffage électrique pour atteindre la température de consigne Tc, c'est-à-dire pour passer de ladite température Tamb déterminée à ladite température de consigne Tc.

Avantageusement, l'alimentation électrique est commune au bloc-ventilateur 2 et au dispositif 3 de chauffage électrique.

Comme détaillé ci-après, lesdits moyens de répartition 6 de commande de puissance peuvent comprendre une loi de programmation qui permet d'activer, c'est-à-dire d'alimenter électriquement, le ventilateur et/ou le dispositif de chauffage instantané en fonction du besoin de l'utilisateur.

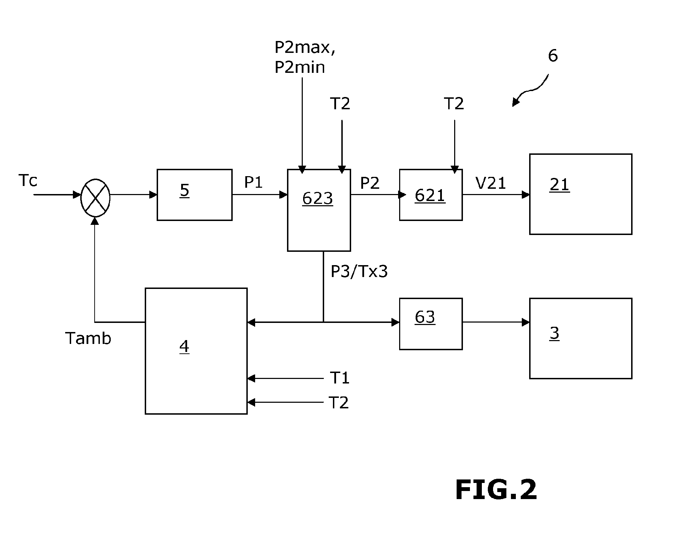

Comme illustré schématiquement à la figure 2, lesdits moyens de répartition 6 de commande de puissance comprennent, d'une part, des moyens de détermination 623 d'une première valeur de puissance P2 de chauffage à fournir par le bloc ventilo-convecteur 2 et d'une deuxième valeur de puissance P3 de chauffage à fournir par le dispositif 3 de chauffage électrique pour atteindre ladite puissance P1 de chauffage globale.

D'autre part, lesdits moyens de répartition 6 comprennent des moyens de commande 621 de la vitesse de rotation V21 du ventilateur 21 du bloc ventilo-convecteur 2 pour fournir ladite première valeur de puissance P2 de chauffage, et des moyens de commande 63 de l'alimentation électrique du dispositif 3 de chauffage électrique pour fournir ladite deuxième valeur de puissance P3 de chauffage.

Une telle conception de l'appareil selon l'invention permet de commander le bloc ventilo-convecteur 2 et le dispositif 3 de chauffage électrique en fonction du besoin de l'utilisateur, et l'un en fonction de l'autre, en faisant varier la vitesse de rotation V21 du ventilateur.

Pour fournir ladite deuxième valeur de puissance P3 de chauffage, les moyens de commande 63 de l'alimentation électrique du dispositif 3 de chauffage électrique commandent le fonctionnement dudit dispositif de chauffage électrique à un taux de marche Tx3 donné. Ledit taux de marche Tx3 est déterminé à partir de ladite deuxième valeur de puissance P3 de chauffage.

Le taux de marche Tx3 correspond à un pourcentage de temps d'alimentation électrique de l'appareil utilisé, c'est-à-dire à un pourcentage de puissance maximale de fonctionnement. Plus précisément, on définit le taux de marche comme le nombre de cycles sur un nombre total de cycles donné, par exemple quatre, pendant lequel on alimente électriquement le dispositif 3 de chauffage électrique. Un cycle de régulation correspond à une durée donnée, par exemple 40 secondes.

Ledit appareil 1 comprend en outre des moyens de détermination de la température de fluide T2 dudit circuit échangeur 20. Lesdits moyens de détermination de température peuvent comprendre une sonde de mesure de la température du fluide présent dans le circuit 20 échangeur.

Dans l'exemple illustré aux figures, l'appareil 1 comprend des moyens de détermination de la puissance de chauffage maximale P2max, et de la puissance de chauffage minimale P2min, disponibles du bloc ventilo-convecteur 2 à partir de la température de fluide T2 déterminée dudit circuit de circulation de fluide 20 et à partir de la vitesse maximale, et de la vitesse minimale, de rotation du ventilateur 21.

Pour une température T2 de fluide donnée, la puissance de chauffage maximale P2max est obtenue pour une vitesse maximale de rotation du ventilateur, tandis que la puissance de chauffage minimale P2min est obtenue pour une vitesse minimale, éventuellement nulle, de rotation du ventilateur.

La répartition de la puissance P1 de chauffage globale à fournir entre le bloc ventilo-convecteur 2 et le dispositif 3 de chauffage électrique est réalisée en fonction de la puissance maximale P2max et de la puissance minimale P2min de chauffage disponibles du bloc ventilo-convecteur 2.

En particulier, afin d'obtenir ladite première valeur de puissance P2 de chauffage à fournir, les moyens de commande 621 de la vitesse du ventilateur sont configurés pour commander la vitesse V21 du ventilateur en fonction de la température T2 de fluide dudit circuit échangeur.

Pour ce faire, l'appareil détermine une vitesse de rotation du ventilateur à commander qui est, compte tenu de la puissance P2max et éventuellement de la puissance P2min que peut fournir le bloc ventilo-convecteur 2, comprise dans la plage de fonctionnement du ventilateur. Si compte tenu de la puissance que peut fournir le bloc ventilo-convecteur 2, la vitesse à commander pour atteindre la puissance souhaitée est en dehors de cette plage, l'appareil répartit alors différemment les puissances de chauffage sur le bloc ventilo-convecteur 2 et le dispositif de chauffage électrique 3.

La détermination 4 de la valeur de température ambiante Tamb est réalisée à l'aide d'une sonde 11 de température permettant de mesurer une valeur de température T1 à proximité dudit appareil 1 de chauffage, en corrigeant ladite valeur de température T1 avec la valeur de température de fluide T2 du circuit échangeur 20 et/ou avec une grandeur représentative de la puissance P3 de chauffage, de préférence la valeur du taux Tx3 de marche, fournie par le dispositif 3 de chauffage électrique.

En effet, la température mesurée par la sonde 11 de l'appareil correspond à la température ambiante combinée avec une élévation de température correspondant au fonctionnement de l'appareil. La correction de la température de la sonde peut être réalisée par une loi de type proportionnel intégral.

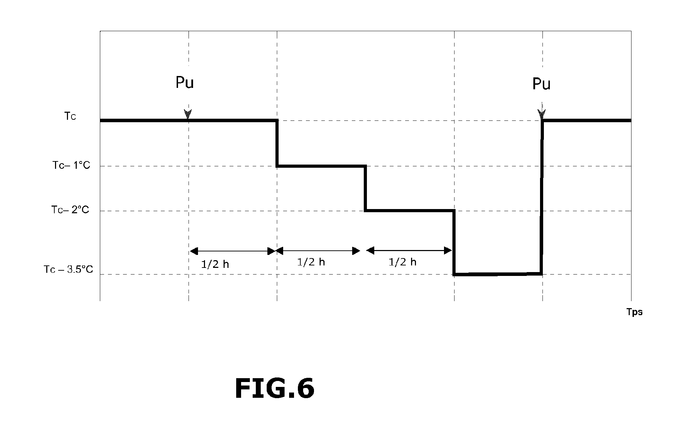

Comme illustré dans l'exemple de la figure 6, on peut prévoir que la température de consigne soit corrigée automatiquement en fonction d'un paramètre extérieur à l'appareil tel que la détection 7 de présence d'un utilisateur. Ainsi, on peut prévoir qu'après un temps donné d'absence de détection de présence, la température de consigne soit abaissée d'un nombre donné de degrés. On peut également prévoir que la température soit abaissée par paliers pour des temps d'absence prédéfinis jusqu'à atteindre une température seuil.

Ainsi dans l'exemple illustré à la figure 6, la température de consigne est abaissée de un degré Celsius après une absence de détection de présence Pu de 30 mn, puis de deux degrés Celsius au bout d'une heure. Enfin, la température de consigne est abaissée de 3,5 °C au bout d'une heure et demi. Lorsqu'une présence Pu est de nouveau détectée, la température de consigne est ramenée à sa valeur initiale.

L'unité de traitement et de calcul comprend des moyens de pilotage configurés pour comparer, d'une part, la valeur de la température de fluide T2 avec plusieurs valeurs seuil de température et, d'autre part, la valeur de la température ambiante Tamb avec la valeur de la température de fluide T2.

Plus précisément, la comparaison de la température de fluide T2 avec une valeur seuil de température dite haute, notée Tsh, par exemple 25°C, permet à l'appareil de déterminer s'il est en mode chaud (T2 > Tsh). De même la comparaison de la température de fluide T2 avec une valeur seuil de température dite froide, notée Tsb et inférieure à Tsh, par exemple 20°C, permet à l'appareil de déterminer s'il est en mode froid (T2 < Tsb). Les valeurs de puissance P2max et P2min varient suivant que l'appareil est en mode chaud ou en mode froid.

Inversement, lorsque T2 est supérieur ou égal à Tsb ou lorsque T2 est inférieur ou égal à Tsh, l'appareil fonctionne en mode défaut pour lequel la vitesse de rotation V21 du ventilateur 21 est nulle.

Lorsque l'appareil est en mode chaud et que l'écart T2- Tamb est supérieur à une valeur seuil, par exemple 5°, la vitesse de rotation V21 du ventilateur 21 est définie en fonction de la puissance P2 à fournir par le bloc ventilo-convecteur. Inversement, lorsque l'écart T2- Tamb est inférieur ou égal à ladite valeur seuil, l'appareil fonctionne en mode défaut pour lequel la vitesse de rotation V21 du ventilateur 21 est nulle.

De manière similaire, lorsque l'appareil est en mode froid et que l'écart Tamb-T2 est supérieur à une valeur seuil, par exemple 5°, la vitesse de rotation V21 du ventilateur 21 est définie en fonction de la puissance P2 à fournir par le bloc ventilo-convecteur. Inversement, lorsque l'écart Tamb- T2 est inférieur ou égal à ladite valeur seuil, l'appareil fonctionne en mode défaut pour lequel la vitesse de rotation V21 du ventilateur 21 est nulle.

Ledit mode défaut permet d'inhiber le ventilateur afin d'éviter de souffler un air à la température non souhaitée. Le principe du mode défaut consiste à ne pas souffler un air à une température non souhaitée.

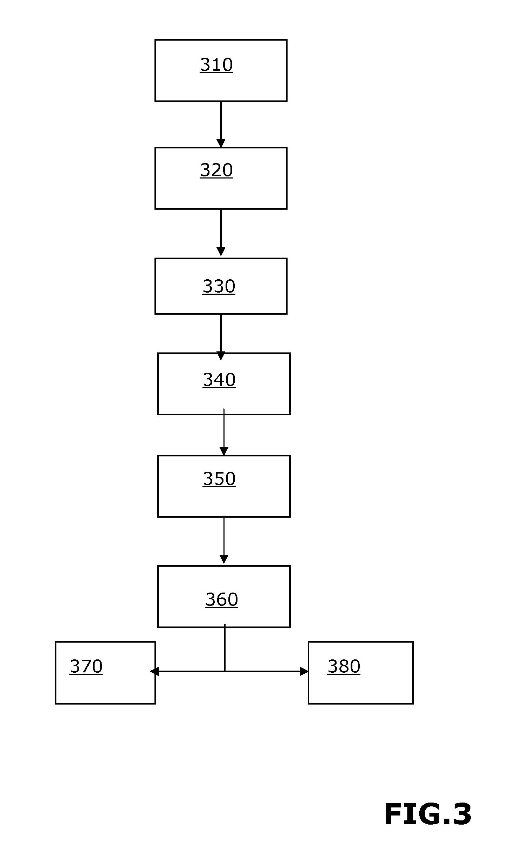

La figure 3 illustre un mode de réalisation possible de régulation de chauffage. A l'étape 310, l'unité de traitement et de calcul de l'appareil détermine la température de consigne Tc pour prendre en compte la demande de l'utilisateur. A l'étape 320, l'unité de commande estime à partir de la température mesurée par la sonde 11 de température de proximité de l'appareil et de la température de fluide du circuit échangeur 20, une valeur de température dite ambiante Tamb correspondant à la température ambiante dans l'environnement dudit appareil. A l'étape 330, l'unité compare la température de consigne Tc avec la température ambiante Tamb et en déduit à l'étape 340 la puissance globale P1 à fournir par l'appareil. A l'étape 350, l'unité de commande calcule à partir de la valeur de la température T2 du circuit échangeur 20 et des vitesses V21 minimale et maximale de rotation du ventilateur, la puissance minimale P2min (restituée par le produit lorsque la ventilation est arrêtée) et maximale P2max disponibles au niveau de l'ensemble du ventilateur 21 et du circuit échangeur 20.

A l'étape 360, l'unité détermine les puissances P2 et P3 à fournir respectivement par le bloc ventilo-convecteur 2 et le dispositif 3 de chauffage électrique pour obtenir la puissance globale P1 à fournir par l'appareil, en fonction de la puissance P2min minimale et de la puissance P2max maximale disponibles. A l'étape 370, l'unité de l'appareil calcule le taux de marche Tx3 correspondant à la puissance P3 et commande l'alimentation de l'élément 3 de chauffage instantané avec ledit taux de marche Tx3. En parallèle, à l'étape 380, l'unité détermine la vitesse V21 de rotation du ventilateur qui permet d'atteindre la puissance P2 compte tenu de la température T2 et commande l'alimentation électrique dudit ventilateur 21 pour atteindre ladite vitesse de rotation déterminée. Les étapes 310 à 380 forment un cycle de régulation répété à une fréquence donnée. On peut prévoir que ladite fréquence soit elle-même modifiable.

La répartition de puissance entre le dispositif de chauffage électrique et le bloc ventilo-convecteur peut être réalisée en fonction de lois de répartition prédéfinies. Le choix de la loi de répartition peut être réalisé en fonction d'un paramètre extérieur, tel que la détection ou non de la présence d'un utilisateur, ou encore la détection de l'ouverture d'une porte ou fenêtre. La loi de répartition peut également être sélectionnée par l'utilisateur, ou programmée notamment en fonction du temps. On peut également prévoir que l'unité de traitement de l'appareil soit munie d'un module d'auto apprentissage configuré pour mémoriser les configurations habituelles de fonctionnement pour un utilisateur donné et de sorte que l'unité de traitement soit apte à sélectionner automatiquement la loi de répartition de puissance en fonction du contexte d'utilisation de l'appareil.

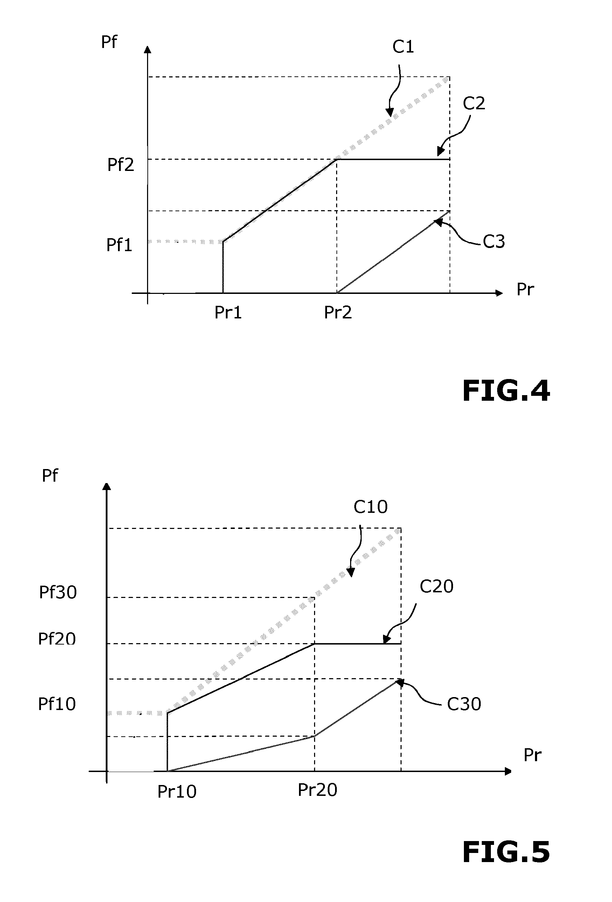

Les lois de répartition des figures 4 et 5 représentent, en fonction de la puissance calorifique demandée, la puissance calorifique fournie de manière globale par l'appareil (courbe C1, C10), la puissance calorifique fournie par convection à l'aide du ventilateur (courbe C2, C20), et la puissance d'appoint fournie par le dispositif de chauffage électrique (courbe C3, C30).

Il est ainsi possible de prévoir une loi de répartition conforme à celle de la figure 4 qui privilégie une atteinte rapide de la température de consigne et une loi de répartition conforme à celle de la figure 5 qui privilégie le confort acoustique de l'utilisateur. En effet, pour la loi de la figure 4, le ventilateur (associé à la courbe C2) est activé dès que la demande de puissance (courbe C1) est supérieure à une valeur Pr1, le dispositif de chauffage électrique (courbe C3) étant activé lorsque la demande de puissance requise dépasse une valeur donnée Pr2 supérieure à Pr1.

Pour la loi de la figure 5, le ventilateur (associé à la courbe C20) est activé dès que la demande de puissance (courbe C10) est supérieure à une valeur Pr1, mais la puissance fournie par l'appareil est répartie dès cette valeur Pr1 entre le ventilateur (courbe C20) et le dispositif de chauffage électrique (courbe C30). Lorsque la demande de puissance dépasse une valeur Pr20, supérieure à Pr10, la puissance fournie par le dispositif de chauffage électrique est augmentée tandis que la puissance fournie par le ventilateur est stabilisée.

Les lois de répartition peuvent être adaptées pour favoriser le confort phonique en réduisant la vitesse du ventilateur, ou pour favoriser le confort thermique ou pour optimiser la consommation énergétique de l'appareil. En particulier, l'unité de commande peut également appliquer des lois de répartition spécifiques à des évolutions rapides de la température du circuit échangeur, afin de maintenir le confort thermique ou acoustique du client.

La présente invention n'est nullement limitée aux modes de réalisation décrits et représentés, mais l'homme du métier saura y apporter toute variante conforme à son esprit.

## Revendications

1. Appareil (1) de chauffage comportant un dispositif (2) de chauffage, appelé bloc ventilo-convecteur, qui comprend un ventilateur (21) et un circuit (20) de circulation de fluide,
**caractérisé en ce que** ledit appareil (1) comporte en outre:
- un dispositif (3) de chauffage électrique,
- des moyens de détermination (4) d'une température (Tamb), appelée température ambiante,
- des moyens de définition d'une température de consigne (Tc), et,
- des moyens de détermination (5), compte tenu de la température de consigne (Tc) et de la température ambiante (Tamb) déterminée, de la puissance (P1) de chauffage globale à fournir par l'appareil (1) pour atteindre la température de consigne (Tc),
et **en ce que** ledit appareil (1) comprend des moyens de répartition (6) de commande de puissance configurés pour répartir entre le bloc ventilo-convecteur (2) et le dispositif (3) de chauffage électrique ladite puissance (P1) de chauffage globale à fournir.

2. Appareil (1) selon la revendication 1, **caractérisé en ce que** lesdits moyens de répartition (6) de commande de puissance comprennent, d'une part, des moyens de détermination (623) d'une première valeur de puissance (P2) de chauffage à fournir par le bloc ventilo-convecteur (2) et d'une deuxième valeur de puissance (P3) de chauffage à fournir par le dispositif (3) de chauffage électrique pour atteindre ladite puissance (P1) de chauffage globale,
et, d'autre part, des moyens de commande (621) de la vitesse de rotation du ventilateur (21) du bloc ventilo-convecteur (2) pour fournir ladite première valeur de puissance (P2) de chauffage, et des moyens de commande (63) de l'alimentation électrique du dispositif (3) de chauffage électrique pour fournir ladite deuxième valeur de puissance (P3) de chauffage.

3. Appareil (1) selon l'une des revendications 1 ou 2, **caractérisé en ce que** ledit appareil (1) comprend des moyens de détermination de la température de fluide (T2) dudit circuit de circulation de fluide (20).

4. Appareil (1) selon les revendications 2 et 3, **caractérisé en ce que** l'appareil (1) comprend des moyens de détermination de la puissance de chauffage maximale (P2max), et éventuellement de la puissance de chauffage minimale (P2min), disponible(s) du bloc ventilo-convecteur (2) à partir de la température de fluide (T2) déterminée dudit circuit de circulation de fluide (20) et à partir de la vitesse maximale, et éventuellement de la vitesse minimale, de rotation du ventilateur (21),
et **en ce que** lesdits moyens de répartition (6) de commande de puissance sont configurés pour répartir la puissance (P1) de chauffage globale à fournir entre le bloc ventilo-convecteur (2) et le dispositif (3) de chauffage électrique en fonction de la puissance maximale (P2max), et éventuellement de la puissance minimale (P2min), de chauffage disponible(s) du bloc ventilo-convecteur (2).

5. Appareil (1) selon l'une des revendications précédentes prise en combinaison des revendications 2 et 3, **caractérisé en ce que**, pour fournir ladite première valeur de puissance (P2) de chauffage, les moyens de commande (621) de la vitesse de rotation du ventilateur (21) commandent ladite vitesse de rotation en fonction de la température de fluide (T2) du circuit de circulation de fluide (20).

6. Appareil (1) selon l'une des revendications précédentes, **caractérisé en ce que** lesdits moyens de détermination (4) de température ambiante (Tamb) comprennent une sonde (11) de température permettant de mesurer une valeur de température (T1) à proximité dudit appareil (1) de chauffage,
et **en ce que** lesdits moyens de détermination (4) de température ambiante sont configurés pour déterminer ladite valeur de température ambiante (Tamb) à partir de la valeur de température (T1) mesurée par ladite sonde (11) de température de proximité et, éventuellement, à partir de la valeur de température de fluide (T2) du circuit de circulation de fluide (20) et/ou d'une grandeur représentative de la puissance (P3) de chauffage, de préférence la valeur du taux (Tx3) de marche, fournie par le dispositif (3) de chauffage électrique.

7. Appareil (1) selon l'une des revendications précédentes, **caractérisé en ce que** ledit appareil (1) comprend des moyens de détection (7) d'un paramètre extérieur à l'appareil (1), tel que la présence ou non d'un utilisateur et/ou l'ouverture d'une porte ou d'une fenêtre,
et **en ce que** ledit appareil (1) comprend des moyens de modification de la température de consigne (Tc) en fonction dudit paramètre extérieur.

8. Appareil (1) selon l'une des revendications précédentes, **caractérisé en ce que** l'appareil comprend des moyens de pilotage configurés pour comparer, d'une part, la valeur de la température de fluide (T2) du circuit de circulation de fluide (20) du bloc ventilo-convecteur (2) avec au moins une valeur seuil de température et, d'autre part, la valeur de la température ambiante (Tamb) avec ladite valeur de la température de fluide (T2) et pour, en fonction du résultat de ces comparaisons, faire fonctionner l'appareil (1) selon un mode, dit mode de défaut, pour lequel la vitesse de rotation (V21) du ventilateur (21) est nulle.

9. Installation de chauffage comprenant un générateur (8) de chauffage central et un appareil (1) de chauffage, **caractérisée en ce que** ledit appareil (1) est conforme à l'une des revendications précédentes, ledit circuit de circulation de fluide de l'appareil étant alimenté en fluide par ledit générateur (8) de chauffage central.

10. Procédé de chauffage à l'aide d'un appareil (1) de chauffage conforme à l'une des revendications 1 à 8, ledit procédé comprenant les étapes de :
- définition (310) d'une température de consigne (Tc),
- détermination (320) d'une température (Tamb), appelée température ambiante,
- détermination (330, 340, 350), compte tenu de la température de consigne (Tc) et de la température ambiante (Tamb) déterminée, de la puissance (P1) de chauffage globale à fournir par l'appareil (1) pour atteindre la température de consigne (Tc),
- répartition (360, 370, 380) de ladite puissance (P1) de chauffage globale à fournir entre le bloc ventilo-convecteur (2) et le dispositif (3) de chauffage électrique.
